# EUROPÄISCHE PATENTSCHRIFT

(11) **EP 2 778 101 B1**
(45) Veröffentlichungstag und Bekanntmachung des Hinweises auf die Patenterteilung: **26.09.2018**
(21) Anmeldenummer: 14153407.3
(22) Anmeldetag: 31.01.2014
(51) Int. Cl.: B65G 43/08, A01K 43/00

(54) **Steuerungsvorrichtung und -verfahren für ein Eierförderband**
Control device and method for an egg conveyor belt
Dispositif et méthode de commande d'un convoyeur à oeufs

(30) Priorität: 11.02.2013 DE 202013001238 U
(43) Veröffentlichungstag der Anmeldung: 17.09.2014
(73) Patentinhaber: Big Dutchman International GmbH, 49377 Vechta (DE)
(72) Erfinder: Kalkhoff, Christian, 49377 Vechta (DE)
(74) Vertreter: Eisenführ Speiser

(56) Entgegenhaltungen:
- EP-B1- 1 856 971
- WO-A1-2011/136644
- DE-U1-202006 004 894
- JP-A- 2001 287 710
- JP-A- 2007 175 027
- NL-C- 1 037 320
- US-A1- 2009 020 395

## Beschreibung

Die Erfindung betrifft eine Steuerungsvorrichtung für ein Eierförderband, umfassend einen Förderbandantrieb, der mechanisch mit dem Förderband gekoppelt und ausgebildet ist, um das Eierförderband in zumindest zwei unterschiedlichen Geschwindigkeiten anzutreiben und eine Bilderfassungseinheit zur Aufnahme eines Bildausschnitts des Förderbands. Ein weiterer Aspekt der Erfindung ist eine Förderbandanordnung mit einer solchen Steuerungsvorrichtung und ein Verfahren zum Steuern der Geschwindigkeit eines Eierförderbandes.

Eierförderbänder werden dazu eingesetzt, um in eierproduzierenden Betrieben Eier aus dem Stall bzw. Nestbereich zu einer Verarbeitungsstation, wie beispielsweise einer Verpackungsstation, zu fördern. Unter einem Eierförderband wird hierbei im Sinne der Beschreibung und der nachfolgenden Ansprüche jegliche Fördereinrichtung verstanden, die Eier fördern kann. Dies sind insbesondere Endlosfördereinrichtungen, die typischerweise als Endlosförderbänder ausgebildet sind und aus einem Kunststoffmaterial bestehen können. Andere Ausgestaltungen können Metallstäbe, Gliederketten, Netze oder Gitter oder andere Ausgestaltungen von Fördereinrichtungen sein.

Ein typisches Fördersystem zum Einsammeln von Eiern aus mehreren Bereichen eines Stalles und zum Fördern dieser Eier zu einer oder mehreren Verarbeitungsstationen besteht aus einer Anzahl von Längsförderbändern, die insbesondere parallel zueinander verlaufen können und auf denen die Eier aus den Nestbereichen unmittelbar aus dem Haltungsbereich der eierlegenden Tiere zu einem Querförderband oder mehreren Querförderbändern gefördert wird. Die Querförderbänder verlaufen typischerweise senkrecht zur Laufrichtung der Längsförderbänder und fördern die aus den Längsförderbändern zugeförderten Eier zu der Verarbeitungsstation.

Eine besondere Problematik bei dieser Förderung besteht darin, dass die Eierproduktion naturgemäß unregelmäßig und nur in bestimmtem statistischen Ausmaß vorhersagbar, aber im Einzelfall, beispielsweise bezogen auf ein Längsförderband, in ihrer Menge und ihrer zeitlichen Verteilung nicht vorhersagbar ist. Dies hat zur Folge, dass das Einsammeln der Eier mittels der Förderbänder mit unterschiedlichen Mengen an Eiern, die zu fördern sind, und folglich unterschiedlichen Besatzdichten der Bänder betrieben werden. Unter einer Besatzdichte ist hierbei eine Belegungsdichte, d.h. eine als Anzahl von Eiern pro Flächeneinheit gemessene Kenngröße des Fördervorgangs zu verstehen.

Eine weitere spezifische Problematik von Eierfördersystemen liegt darin, dass die Eier in ihrem Aufbau empfindlich gegenüber Beschädigungen sind. Während die Mehrzahl von Eiern eine feste, in Maßen belastbare Schale aufweisen, finden sich unter den eingesammelten und geförderten Eiern auch eine geringe Anzahl von Eiern mit dünner Schale, die ausgesprochen empfindlich gegenüber Belastungen sind. Eier, die im Zuge des Fördervorgangs mit hohen Förderkräften beaufschlagt werden, können beschädigt werden und hierdurch Verschmutzungen der Förderanlage hervorrufen, die wiederum zusätzliche Probleme durch Verklebungseffekte nach sich ziehen. Dies trifft insbesondere für Eier mit sehr dünnwandiger Schale zu. So sind Eier im Zuge des Fördervorgangs insbesondere empfindlich gegenüber auftretenden Stauungen, bei denen die Eier untereinander hohe horizontale Kräfte verursachen, welche zu Beschädigungen einzelner oder mehrerer Eier führen können.

Aus EP 1 856 971 B1 ist eine Zählvorrichtung bekannt, die mittels zeilenweiser Abtastung eines Förderbandes die darauf geförderten Eier zählt. Diese Zählvorrichtung wird auch für den Zweck beschrieben, auf Grundlage des Zählergebnisses ein Förderband so anzusteuern, dass eine vorbestimmte Anzahl von Eiern gefördert wird. Es hat sich in der Praxis gezeigt, dass zwar eine solche Ansteuerung eines Förderbandes in vielen Fördersituationen zu einer beschädigungsfreien und bedarfsgerechten Förderung führt, in einigen Fördersituationen kann aber ein ruckfreier Betrieb des Förderbandes nicht vermieden und hierdurch tritt die Gefahr von Beschädigungen der Eier auf.

Aus der JP 2001 287710 A ist eine Eiersortiervorrichtung bekannt, welche erste Förderer und zweite Förderer umfasst, die durch Motoren entsprechend angetrieben werden. Eiertragedichten beider Förderer werden durch CCD-Kameras überwacht und entsprechende Motoren basierend auf der Tragedichte-Information gesteuert.

Aus der NL 1037320 ist eine Vorrichtung zum Zuführen von Eiern zu einer Verpackungsmaschine bekannt. Die Vorrichtung umfasst ein zentrales Eierförderband und mehrere Zuführförderer, welche Eier aus einem Geflügelhaus auf das zentrale Eierförderband fördern. Ein System bestimmt die Menge der Eier, die auf einem Band vorhanden sind. Die Geschwindigkeit des Förderbands wird gesteuert.

Aus der US 2009/0020395 A1 ist ein Eiersammelsystem bekannt, bei dem die Anzahl der Eier bestimmt wird, welche auf einem vorwärtslaufenden Förderband und/oder einem rückwärtslaufenden Förderband getragen werden, um die Geschwindigkeit eines Förderantriebsbands zu steuern.

Die Problematik des unregelmäßigen Fördervorgangs einerseits und der Gefahr von Beschädigungen andererseits wirkt sich insbesondere an Verarbeitungsstationen problematisch hinsichtlich des Steuerungs- und Regelungsverhaltens solcher Fördersysteme aus. An solchen Verarbeitungsstationen ist es regelmäßig wünschenswert, einen kontinuierlichen Fluss von Eiern zu erzeugen, um die Verarbeitungsstation effizient betreiben zu können. Ein solcher kontinuierlicher Eierstrom im Bereich des in die Verarbeitungsstation mündenden Endes des Fördersystems wäre zwar am besten mit einem dort gebildeten Eierstau und dessen langsamen kontinuierlichen Abzugs durch die Verarbeitungsstation zu lösen, dies stellt aber aufgrund der Gefahr von Beschädigungen bei der Förderung von Eiern keine praktikable Lösung dar.

Der Erfindung liegt die Aufgabe zugrunde, eine Steuerungsvorrichtung für ein Eierförderband bereitzustellen, welche es ermöglicht, ein Eierförderband in solcher Weise anzusteuern, dass unter einer zuverlässigeren Vermeidung von Beschädigungen der Eier eine höhere oder unterbrechungsfreiere Förderrate erreicht wird, als im Stand der Technik bekannt.

Diese Aufgabe wird erfindungsgemäß durch eine Steuerungsvorrichtung nach Anspruch 1 gelöst.

Mit der erfindungsgemäßen Steuerungsvorrichtung wird eine vorteilhafte Steuerung eines Eierförderbandes mit einer effizienten Förderung bei gleichzeitiger Schonung der Eier und signifikanter Reduktion des Bruchrisikos der geförderten Eier erreicht. Hierzu wird eine Bilderfassungseinheit eingesetzt, die einen Bildausschnitt des Förderbandes aufnimmt. Dieser Bildausschnitt kann sich vorzugsweise über die gesamte Breite des Förderbandes erstrecken und einen Längenbruchteil des Förderbandes umfassen. Die mit der Bilderfassungseinheit aufgenommenen Bilder werden an eine Auswertungseinheit übermittelt. Diese Auswertungseinheit umfasst eine Zähleinheit. Mit der Zähleinheit wird die Anzahl der Eier, die in einer einzigen Bildaufnahme innerhalb des Bildausschnittes vorhanden sind, gezählt. Das so ermittelte Ergebnis ergibt eine Besatzdichte, also eine Angabe über die Anzahl von Eiern pro Flächeneinheit auf dem Förderband innerhalb des Bildausschnitts. Grundsätzlich ist es zwar wünschenswert, das Förderband in seiner Fläche solcherart ideal auszunutzen, dass die Besatzdichte hoch ist, andererseits ist die Besatzdichte auch ein indirektes Kriterium dafür, ob die Gefahr von hohen Kontaktkräften zwischen einzelnen Eiern, Eiergruppen oder sämtlichen Eiern innerhalb des Bildausschnitts besteht.

Erfindungsgemäß erfolgt der Regelvorgang anhand von einer einzelnen Momentaufnahme und der daraus ermittelten Besatzdichte, die sich als zuverlässiges Kriterium für die Erfassung von beginnenden Stauzuständen erwiesen hat. Die Steuerung bzw. Regelung kann dabei insbesondere so erfolgen, dass bei Überschreiten eines bestimmten Grenzwertes der Besatzdichte eine Änderung der Förderbandgeschwindigkeit erfolgt, es können auch mehrere Grenzwerte mit entsprechend unterschiedlich gestufter Änderung der Förderbandgeschwindigkeit in der Regelungseinheit gespeichert sein. In einer Fortbildung hierzu kann die Besatzdichte zu einem ersten Zeitpunkt und die Besatzdichte zu einem nachfolgenden zweiten Zeitpunkt erfasst und miteinander verglichen werden und anhand einer dabei festgestellten Besatzdichtenänderung ein Regelvorgang des Förderbandes erfolgen, beispielsweise dann, wenn die Besatzdichtenänderungen einen vorbestimmten Grenzwert überschreitet.

Die Erfindung kann fortgebildet werden durch eine Differentialeinheit, die ausgebildet ist, um aus einer Sequenz von Bildaufnahmen die Anzahl der in einer vorbestimmten Zeitdauer auf dem Förderband geförderten Eier als Förderrate zu bestimmen und dadurch, dass die Regelungseinheit mit der Differentialeinheit signaltechnisch gekoppelt und ausgebildet ist, um in Abhängigkeit der Besatzdichte und der Förderrate die Geschwindigkeit des Förderbandantriebs zu regeln. Mit der Differentialeinheit wird eine Sequenz von Bildaufnahmen ausgewertet und aus dieser Sequenz ermittelt, welche Förderrate durch den Bildausschnitt aktuell realisiert wird. Die Förderrate kann aus einer Sequenz von Bildaufnahmen in unterschiedlicher Weise ermittelt werden. So ist es beispielsweise möglich, die Anzahl der in Förderrichtung in den Bildausschnitt eintretenden Eier über mehrere Bildsequenzen zu zählen und diese Anzahl dividiert durch die Dauer, welche die Sequenz von Bildausschnitten überstreicht, als Förderrate der weiteren Berechnung zugrunde zu legen. Ebenso könnte die Anzahl der in Förderrichtung aus dem Bildausschnitt austretenden Eier über mehrere Bildsequenzen gezählt und entsprechend dividiert durch die Beobachtungsdauer als Förderrate der weiteren Berechnungen zugrunde gelegt werden. Eine weitere Möglichkeit besteht darin, beide Größen zu ermitteln und den kleineren der dabei ermittelten Werte als Förderrate zugrunde zu legen, um auf diese Weise einen über die Länge des beobachteten Förderbandabschnittes ermittelte Mindestförderrate zu erhalten. Die so auf die eine, andere oder kombinierte oder in noch anderer Weise aus den Bildsequenzen ermittelte Förderrate ist ein Maß für die Fördereffizienz des Systems. Im Idealzustand besteht ein linearer Zusammenhang zwischen der Besatzdichte, der Förderbandgeschwindigkeit und der Förderrate, allerdings wird dieser Idealzustand aufgrund der Beweglichkeit der Eier auf dem Förderband selbst in der Praxis nicht erreicht. Aufgrund von Bewegungen der Eier auf dem Förderband selbst besteht daher stets eine Differenz zu dem solcherart bestimmbaren Idealwert als dem Produkt aus Besatzdichte und Förderbandgeschwindigkeit und die tatsächliche Förderrate liegt typischerweise niedriger als die solcherart berechnete theoretische Förderrate.

Erfindungsgemäß ist eine Regelungseinheit vorgesehen, welche die Besatzdichte und fortbildungsgemäß bevorzugt zusätzlich die Förderrate von der Auswertungseinheit empfängt und hieraus eine Steuerungs- oder Regelgröße erzeugt, die zur Steuerung bzw. Regelung des Förderbandantriebs eingesetzt wird. Erfindungsgemäß wird somit die Besatzdichte, vorzugsweise zusätzlich die Förderrate als Eingangsgröße für eine Regelung oder Steuerung der Geschwindigkeit des Förderbandes eingesetzt. Mit dieser Art der Steuerung wird eine gegenüber bekannten Steuerungen bzw. Regelungen überlegene Steuerung/Regelung der Förderbandgeschwindigkeit erreicht, mit der es aufgrund effektiv gewählter Eingangsgrößen möglich wird, eine hohe Förderrate zu realisieren und hierbei die Beschädigung von Eiern praktisch vollständig zu vermeiden. Die Erfindung liegt dabei darin, eine Eingangsgröße für die Regelung heranzuziehen, welche eine charakteristische Prognose für einen beginnenden Stauvorgang ermöglicht.

Vorzugsweise werden zwei Eingangsgrößen verwendet, wobei die Gewichtung und Berechnung der beiden Eingangsgrößen je nach der Art und Weise des Eierförderbandes, beispielsweise dessen Oberflächenbeschaffenheit, dem Förderbandverlauf vor und hinter dem Bildausschnitt und dem Zulieferverhalten in den Bildausschnitt sowie dem Abnahmeverhalten aus dem Bildausschnitt heraus in unterschiedlicher Weise gewählt werden kann. Grundsätzlich kann die Berechnung, die innerhalb der Regelungseinheit erfolgt, dabei davon ausgehen, dass eine zunehmende Besatzdichte bei gleichbleibender oder abnehmender Förderrate ein Indiz für einen Stau auf dem Förderband ist, der es erforderlich macht, dass entweder in vermehrtem Maß aus dem Bildausschnitt Eier weggefördert werden oder in verringertem Maß in den Bildausschnitt Eier hinzugefördert werden. Je nachdem, ob der Bildausschnitt am Anfang eines Förderbandes oder am Ende eines Förderbandes angeordnet ist, muss die Förderrate demzufolge also in einer solchen Situation entweder erhöht (Anfangsbildausschnitt) oder verringert (Endbildausschnitt) werden. In gleicher Weise deutet eine gleichbleibende oder zunehmende Besatzdichte bei einer abnehmenden Förderrate auch auf eine Stausituation hin und erfordert entsprechende Regelungseingriffe.

Grundsätzlich ist zu verstehen, dass die Förderbandgeschwindigkeit vorzugsweise stufenlos geregelt werden kann. Dies hat den Vorteil, dass ruckartige Geschwindigkeitsänderungen, insbesondere ein Start-Stopp-Betrieb des Förderbandes im Zuge der Steuerung bzw. Regelung vermieden werden kann und stattdessen eine sowohl den Förderbandantrieb als auch die geförderten Eier schonende Steuerungs- bzw. Regelungsweise erreicht werden kann. Dies wird aufgrund der spezifisch ausgewählten Eingangswerte der Regelungsweise besonders gefördert. In entsprechender Weise kann auch die Verarbeitungseinrichtung hinsichtlich ihrer Verarbeitungsgeschwindigkeit vorzugsweise stufenlos geregelt bzw. gesteuert werden.

Gemäß einer bevorzugten Ausführungsform ist vorgesehen, dass die Regelungseinheit ausgebildet ist, um die Geschwindigkeit des Förderbandes im Falle der Anordnung des Bildausschnitts am Ende des Förderbandes zu verringern oder im Falle der Anordnung des Bildausschnitts am Anfang des Förderbandes zu erhöhen, wenn sich die Besatzdichte von einer Bildaufnahme zu einer darauffolgenden Bildaufnahme erhöht hat, insbesondere um eine vorbestimmte Quote erhöht hat und/oder die Förderrate in einer Sequenz von Bildaufnahmen zu einer darauffolgenden Sequenz von Bildaufnahmen verringert hat, insbesondere dass der Bildausschnitt im Endbereich eines Förderbandes angeordnet ist und die Regelungseinheit ausgebildet ist, um die Geschwindigkeit des Förderbandes zu verringern, wenn sich die Besatzdichte von einer Bildaufnahme zu einer darauffolgenden Bildaufnahme erhöht hat, insbesondere um eine vorbestimmte Quote erhöht hat und sich die Förderrate in einer Sequenz von Bildaufnahmen zu einer darauffolgenden Sequenz von Bildaufnahmen verringert hat oder unverändert geblieben ist. Mit dieser Fortbildung wird allgemein erreicht, dass mit einer spezifischen Auswertung von Besatzdichte und/oder Förderrate eine gesonderte Regelungsmaßnahme in Abhängigkeit der Anordnung des Bildausschnitts am Förderband vorgenommen wird. Dabei ist unter dem Anfang des Förderbandes der in Förderrichtung vorne liegende Endbereich des Förderbandes zu verstehen und unter dem Ende des Förderbandes der in Förderrichtung hinten liegende Endbereich des Förderbandes zu verstehen. Steigt die Besatzdichte und/oder sinkt die Förderrate ist typischerweise eine Stausituation auf dem Förderband erkannt worden und es muss das Abführen von Eiern aus dem beobachteten Bildausschnitt erhöht werden bzw. das Zuführen von Eiern in den beobachteten Bildausschnitt verringert werden.

Weiterhin ist es bevorzugt, dass die Regelungseinheit ausgebildet ist, um die Geschwindigkeit des Förderbandes zu verringern, wenn die Besatzdichte in einer Bildaufnahme einen vorbestimmten Wert überschritten hat und/oder wenn die Förderrate in einer Bildaufnahme einen vorbestimmten Wert unterschritten hat. Mit dieser Regelweise, die isoliert oder ergänzend zu der vorgenannten Regelungsweise eingesetzt werden kann, wird anhand einer Über- bzw. Unterschreitung vorbestimmter Werte für Besatzdichte bzw. Förderrate eine Regelungsmaßnahme oder ein Regelungseinfluss getroffen. Grundsätzlich ist dabei zu verstehen, dass auch mehr als eine Grenze als vorbestimmter Wert bestimmt werden kann und je nach Überschreitung einer Grenze, einer weiteren oder noch weiteren Grenzen dann entsprechende unterschiedliche Regelungsmaßnahmen getroffen werden können. Grundsätzlich kann diese Ausführungsform auch so ausgestaltet sein, dass eine Grenze für einen Wert definiert wird, der mathematisch aus Förderrate und Besatzdichte berechnet wird, beispielsweise als Quotient aus Besatzdichte zu Förderrate, und in Abhängigkeit der Überschreitung eines Grenzwertes für einen solchen Wert dann eine Regelung erfolgt. Diese Ausführungsform ist dabei für die Anordnung des Bildausschnitts am Ende eines Förderbandes ausgebildet und es ist zu verstehen, dass in gleicher Weise die Geschwindigkeit des Förderbandes erhöht werden kann, wenn der Bildausschnitt am Anfang eines Förderbandes angeordnet ist.

Die Auswertungseinheit ist ausgebildet, um ein in den Bildausschnitt eintretendes Ei zu erkennen, das Ei in mehreren aufeinander folgenden Bildaufnahmen einer Bildsequenz zu verfolgen und aus der innerhalb des Bildausschnitts zurückgelegten Strecke des Eies pro Zeiteinheit eine Bewegungsgeschwindigkeit des Eis zu ermitteln und als Förderbandgeschwindigkeit auszugeben, wobei eine Mehrzahl von Eiern erkannt und verfolgt wird und ein Mittelwert der aus den daraus ermittelten Bewegungsgeschwindigkeiten der Eier berechnet und als Förderbandgeschwindigkeit ausgegeben wird Vorzugsweise bleibt eine Bewegungsgeschwindigkeit eines Eis, welche um eine vorbestimmte Differenz von dem Mittelwert abweicht, unberücksichtigt und eine korrigierte Berechnung der Förderbandgeschwindigkeit erfolgt unter Mittelwertbestimmung der verbleibenden Bewegungsgeschwindigkeiten der Eier. Hierdurch wird durch die Bilderfassungs- und Auswertungseinheit unmittelbar eine für das Regelungs- oder Steuerungsverhalten der Steuerungsvorrichtung maßgebliche Eingangsgröße ermittelt, nämlich die Förderbandgeschwindigkeit. Dies wird durch Erkennen der Eier, beispielsweise durch eine Grauwert- oder Konturenanalyse, und Verfolgen dieser Eier zur Ermittlung einer Geschwindigkeit der Eier erreicht. Dabei kann grundsätzlich ein einziges Ei zur Ermittlung der Förderbandgeschwindigkeit herangezogen werden. Bevorzugt ist es aber, mehrere Eier heranzuziehen, um hierdurch eine sichere Berechnungsgrundlage zu erhalten. Eier, die hinsichtlich ihrer Geschwindigkeit von der Geschwindigkeit anderer Eier maßgeblich abweichen, also in erheblicher Weise über oder unter dem Mittelwert liegen, werden hierbei aus der Berechnung herausgenommen, da anzunehmen ist, dass diese Eier sich auf dem Förderband bewegen und folglich keine geeignete Größe zur Bestimmung der Förderbandgeschwindigkeit bereitstellen. Diese verbesserte Präzision der Berechnung kann beispielsweise als iterative Berechnung in einem, zwei oder mehr Schritten erfolgen, indem der Mittelwert über die erfassten und verfolgten Eier nach Herausnahme eines entsprechend stark abweichenden Eies erneut berechnet wird, um dann gegebenenfalls wiederum ein gegenüber diesem neu berechneten Mittelwert in auffallender Weise abweichendes Ei herauszunehmen.

Noch weiter ist es bevorzugt, dass die Bilderfassungseinheit angeordnet und ausgerichtet ist zur Aufnahme eines Bildausschnitts des Förderbands in dem in die Verarbeitungseinrichtung mündenden Endbereich des Förderbands. Gemäß dieser Ausführungsform ist die Bilderfassungseinheit solcherart angeordnet, dass sie das Förderband im Endbereich vor der Verarbeitungseinrichtung überwacht. Die Verarbeitungseinrichtung kann hierbei eine Verpackungsstation, Sortierstation oder dergleichen sein und kann insbesondere hinsichtlich ihrer Verarbeitungsgeschwindigkeit ebenfalls steuer- oder regelbar sein zwischen zumindest zwei Geschwindigkeiten.

Dabei ist es besonders bevorzugt, wenn die Steuerungsvorrichtung signaltechnisch mit der Verarbeitungseinrichtung gekoppelt und ausgebildet ist, um ein Signal zu empfangen, welches eine Verarbeitung, eine Verarbeitungsgeschwindigkeit und/oder einen Stillstand der Verarbeitungseinrichtung charakterisiert und um in Abhängigkeit dieses Signals den Förderbandantrieb anzusteuern. Mit dieser Fortbildung wird die Steuerungsvorrichtung in die Lage versetzt, in Abhängigkeit des Betriebszustandes der Verarbeitungseinrichtung den Förderbandantrieb anzusteuern. So kann beispielsweise auf Betriebszustandsänderungen der Verarbeitungseinrichtung unmittelbar reagiert werden, bevor diese einen Stau auf dem Förderband verursacht haben oder bevor diese eine zu geringe Zuförderleistung aus dem Förderband nach sich gezogen haben, wenn die Verarbeitung der Eier in der Verarbeitungseinrichtung reduziert bzw. erhöht wird.

Weiterhin ist es bevorzugt, dass die Steuerungsvorrichtung signaltechnisch mit der Verarbeitungseinrichtung gekoppelt und dass die Regelungseinheit ausgebildet ist, um in Abhängigkeit der Besatzdichte und der Förderrate die Verarbeitungseinrichtung zusätzlich oder alternativ zur Geschwindigkeit des Förderbandantriebs anzusteuern, insbesondere die Verarbeitungsgeschwindigkeit der Verarbeitungseinrichtung zu regeln. Mit dieser Fortbildung wird die Steuerungsvorrichtung in die Lage versetzt, ein Steuer- bzw. Regelsignal an die Verarbeitungseinrichtung selbst zu geben, um hierdurch auf bestimmte erfasste Situationen zu reagieren. So kann beispielsweise die Verarbeitungsgeschwindigkeit der Verarbeitungseinrichtung mit dieser Fortbildung durch die Steuerungsvorrichtung erhöht werden, wenn eine Stausituation im Zuförderbereich in die Verarbeitungseinrichtung ermittelt wird oder es kann die Verarbeitungsgeschwindigkeit reduziert werden, wenn in einem Förderbandbereich hinter einer Verarbeitungseinrichtung eine Stausituation erfasst wird.

Schließlich kann die Förderbandanordnung mit der erfindungsgemäßen Steuerungsvorrichtung fortgebildet werden, indem zwei oder mehr Förderbänder mit der Verarbeitungseinrichtung zur Zufuhr von Eiern verbunden sind, jedes der Förderbänder mit jeweils einem Förderbandantrieb angetrieben wird, dessen Geschwindigkeit jeweils mittels einer Regelungseinheit, die signaltechnisch mit einer Auswertungseinheit und einer Bilderfassungseinheit zur Erfassung eines Förderbandausschnitts des jeweiligen Förderbandes gekoppelt ist, geregelt ist. Diese Fortbildung ermöglicht es, aus unterschiedlichen Bereichen eines Stalls Eier zu einer Verarbeitungseinrichtung zuzufördern und hierbei Stausituationen für die Förderbänder, welche aus den unterschiedlichen Bereichen die Eier fördern, in unabhängiger Weise voneinander zu erfassen und zu vermeiden. Diese differenzierte Regelung kann beispielsweise an mehreren übereinander oder nebeneinander angeordneten und parallel laufenden Förderbändern erfolgen, indem jeweils Bildausschnitte auf jedem Förderband in der zuvor beschriebenen Weise mittels der Steuerungsvorrichtung erfasst, ausgewertet und zur Steuerung bzw. Regelung herangezogen werden.

Ein weiterer Aspekt der Erfindung ist ein Verfahren nach Anspruch 9. Mit dem erfindungsgemäßen Verfahren wird, vorzugsweise unter Einsatz der zuvor erläuterten erfindungsgemäßen Steuerungsvorrichtung bzw. Förderbandanordnung, eine besonders effiziente Förderung von Eiern unter zuverlässiger Vermeidung von Beschädigungen der Eier erreicht.

Das Verfahren kann insbesondere fortgebildet werden durch den Schritt Bestimmen der Anzahl der in einer vorbestimmten Zeitdauer auf dem Förderband geförderten Eier als Förderrate aus einer Sequenz von Bildaufnahmen mittels einer Differentialeinheit, und Regeln der Geschwindigkeit des Förderbandantriebs in Abhängigkeit der Besatzdichte und der Förderrate mittels der Regelungseinheit.

Die Vorteile und weitere Fortbildungen des Verfahrens können dabei entsprechend der Ausführungsformen zur zuvor beschriebenen Steuerungsvorrichtung verwirklicht werden. Insbesondere kann das Verfahren nach den Ansprüchen 11 - 15 fortgebildet werden, wobei hinsichtlich der Ausführungsformen und Vorteile dieser Verfahrensfortbildungen auf die zuvor beschriebene, entsprechend korrespondierende Beschreibung zu der Steuerungsvorrichtung bzw. Förderbandanordnung Bezug genommen wird.

Die Erfindung wird anhand von den nachfolgend erläuterten, bevorzugten Ausführungsformen unter Bezugnahme auf die Figuren weiter erläutert. Es zeigen:
- Fig. 1: eine schematische Draufsicht auf den Einlauf einer Eiersortiermaschine,
- Fig. 2: eine schematische Ansicht des Aufbaus eines eierproduzierenden Betriebs,
- Fig. 3: eine Seitenansicht eines Ausführungsbeispiels der erfindungsgemäßen Steuerungsvorrichtung, und
- Fig. 4: eine Draufsicht auf eine weitere Ausführungsform der Erfindung.

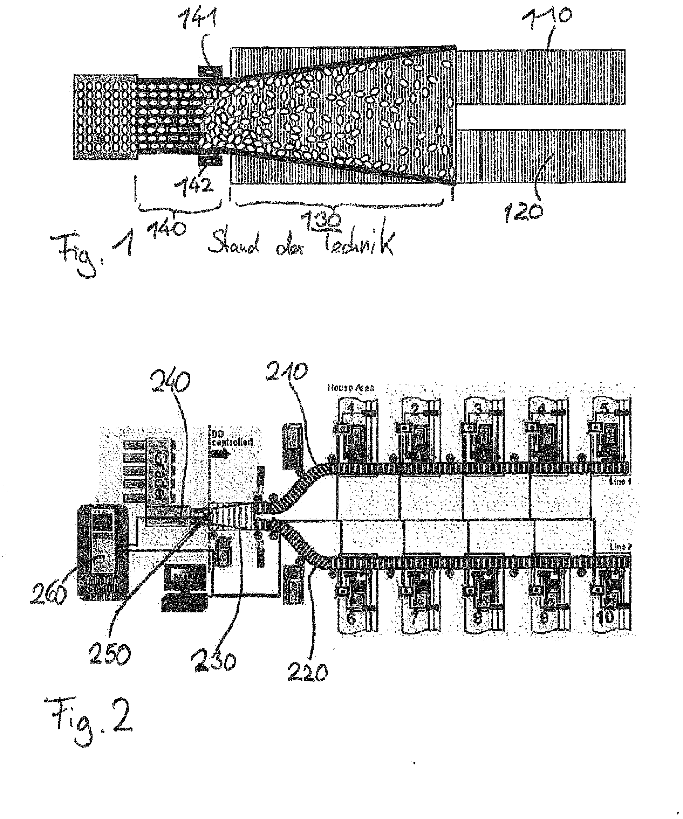

Bezugnehmend zunächst auf Fig. 1 ist ein grundsätzlicher Aufbau des Einlaufs in eine Sortiermaschine am Ende von einer Förderstrecke für Eier gezeigt. Die Förderstrecke verfügt in diesem Endbereich über zwei Zuführbänder 110, 120, die die Eier in einen Leittrichter 130 hineinfördern. In diesem Leittrichter 130 sammeln sich die Eier und werden in einzelne Zeilen, die durch Trennwände in einem Leitbereich 140 voneinander getrennt sind, hineingeleitet, um dann nach dieser Sortierung in geordneter Weise verpackt zu werden. Bei der hier dargestellten Ausführungsform ist eine Sensorik 141, 142 zur Messung der Querkraft nach dem Stand der Technik im Einlaufbereich angeordnet, die durch entsprechende beaufschlagte, halbgerundete Kontaktplatten auf horizontal messende Kraftsensoren wirkt und so ein Maß für die Druckkraft, die im Einlaufbereich bei einem Stau der Eier auf die Eier wirkt, darstellen soll.

Fig. 2 zeigt eine schematische Ansicht des Gesamtaufbaues eines eierproduzierenden Betriebs. Insgesamt sind hier zehn Stallbereiche 1-10 vorhanden, welche Eier produzieren und diese Eier mittels entsprechender Längsbänder auf insgesamt zwei Querförderbänder 210, 220 zufördern. Die Querförderbänder 210, 220 fördern die Eier dann aus diesen Stallbereichen hinaus zu einem Einlauftrichter 230 in eine Verarbeitungsstation 240. In der Verarbeitungsstation werden die Eier wiederum in entsprechender Weise über den Einlauftrichter einer Sortier- und Verpackungseinrichtung zugeführt.

In Förderrichtung am Ende des Einlauftrichters 230 ist eine Bilderfassungseinheit 250 angeordnet und ausgerichtet, um einen Ausschnitt aus dem Förderbereich in diesem Endbereich zu erfassen. Diese Bilderfassungseinheit 250 übermittelt die von ihr erfassten Bilder an eine Auswertungs- und Regelungseinheit 260, welche dazu ausgebildet ist, um aus einer Einzelbildaufnahme eine Besatzdichte und aus einer Sequenz von Einzelbildem eine Förderrate sowie eine Förderbandgeschwindigkeit zu ermitteln. Die Auswertungs- und Regelungseinheit 260 erhält weiterhin Signale von weiteren an sie angeschlossenen Vorrichtungen. Diese Signale können vielfältig sein, beispielsweise können Betriebssignale der Sortier- und Verpackungseinrichtung empfangen werden, ebenso aber Zählsignale aus den einzelnen Stallbereichen 1 - 10, welche signalisieren, wie viele Eier dort auf den Längsbändern auf den Abtransport warten und weitere Signale. Durch die Auswertungs- und Regelungseinheit werden einerseits alle Eier, die in dem Bildausschnitt hineinkommen, gezählt und im Bild verfolgt. Weiterhin wird erfasst, wie viele Eier durch den Bildausschnitt hindurchgefördert werden und dieser Wert als Eiermenge in Eier/h ausgegeben. Die Auswertungs- und Regelungseinheit erfasst weiterhin die Anzahl sämtlicher Eier im Einzelbild und erhält Signale darüber, ob die Sortiermaschine in Betrieb ist, ob das Förderband läuft und über die Bandgeschwindigkeit innerhalb der Sortiermaschine.

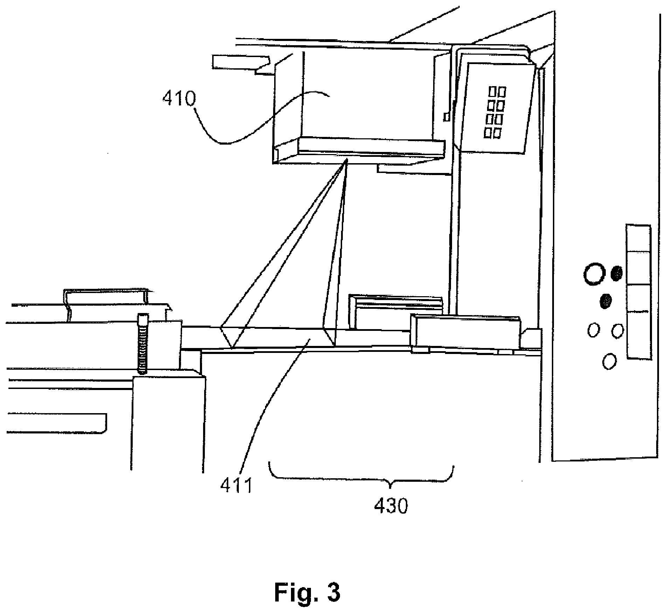

Fig. 3 zeigt in einer Seitenansicht eine Bilderfassungseinheit 410, die einen Bildausschnitt 411 erfasst. Der Bildausschnitt 411 erstreckt sich über die gesamte Breite der Förderstrecke im Bereich eines Einlauftrichters 430 und über einen Anteil von dessen Länge. Die Bilderfassungseinheit ist oberhalb des Einlauftrichters angeordnet.

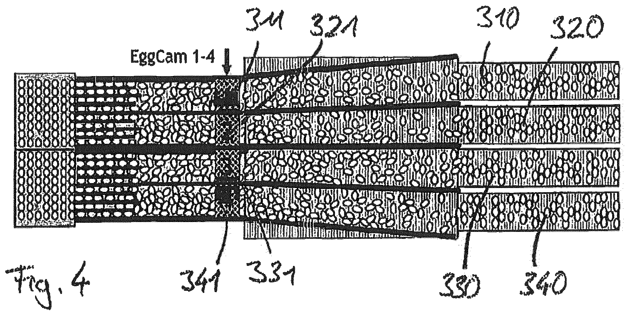

Im dargestellten Beispiel sind zwei Querförderbänder gezeigt, die in eine einzelne Sortiermaschine zufördern. Grundsätzlich ist zu verstehen, dass in gleicher Weise ein einzelnes Querförderband oder mehr als zwei Querförderbänder, beispielsweise vier Querförderbänder separat gesammelt und entsprechend bilderfasst werden können. Fig. 4 zeigt eine Ausführungsform, bei der mit insgesamt vier Querförderbändern 310 - 340 die Eier eingesammelt werden und in einen Einlauftrichter zu einer Sortiermaschine zugeführt werden. In diesem Fall werden vier einzelne Bildausschnitte 311-341 im hinteren Bereich des Einlauftrichters erfasst, wobei die Querförderbänder in diesem Einlauftrichter getrennt voneinander geführt werden. Die vier einzelnen Bildausschnitte 311-341, die von vier separaten Bilderfassungseinrichtungen oder in zusammengefasster Form durch eine einzige oder zwei Bilderfassungseinrichtungen erfasst werden können, ermöglichen es dann, dass die Förderbandgeschwindigkeit jedes einzelnen Querförderbandes individuell in Abhängigkeit einer jeweiligen Stausituation oder Mangelsituation von Eiern in dem jeweiligen Bildausschnitt geregelt wird.

Mit dem erfindungsgemäßen Steuerverfahren bzw. der erfindungsgemäßen Steuerungseinrichtung wird es somit möglich, eine stufenlose Regelung mehrerer unabhängiger Querförderbänder mit individueller Regelung jedes Einlaufbereichs zu erreichen. Hierbei kann ein Sollwert vorgegeben werden, der in Summe durch die mehreren Querförderbänder erreicht werden soll und dieser entsprechend anteilig auf die einzelnen Bahnen verteilt werden. Der durch die Bilderfassung und -auswertung ermittelte Istwert pro Bahn wird über eine schnelle Mittelwertbildung harmonisiert. Über Ausgänge und entsprechende Stellsignale oder Busübertragungen wird der Sollwert einem entsprechend zuständigen Frequenzumformer, der für den Förderbandantrieb als Stellgröße dient, vorgegeben. Jede der mehreren Regelungen arbeitet dabei autark und wird über die erfindungsgemäße Steuerungsvorrichtung übergeordnet durch Anpassung der einzelnen Sollwerte synchronisiert.

Durch Kombination der Förderrate und Besatzdichte der Eier wird ein beginnender Stau frühzeitig erkannt. Erhöht sich die Anzahl der Eier im Bild bei gleichzeitig konstanter oder sinkender Anzahl der Eier pro Stunde (Förderrate), dann ist mit einem beginnenden Stau zu rechnen. Die Geschwindigkeit des Querbandes kann entsprechend der überzählig gezählten Eier gedrosselt werden. Die Stärke dieser Drosselung kann über einen Regelungsfaktor stufenlos eingestellt werden.

Durch Verfolgen eines oder mehrerer Eier wird die Bandgeschwindigkeit ermittelt. Dies kann beispielsweise erfolgen, indem bei einem neu in den Bildausschnitt eingetretenen und erkannten Ei in vier darauf folgenden Bildern dessen Position ermittelt und daraus eine Geschwindigkeit des Eies berechnet wird. Dies kann, wenn mehrere Eier gleichzeitig erfasst und ausgewertet werden, solcherart erfolgen, dass Geschwindigkeiten von Eiern, die stark von den anderen Eigeschwindigkeiten abweichen, aus der Betrachtung entfernt werden, um hierdurch in zuverlässiger Weise die Förderbandgeschwindigkeit zu ermitteln.

Erfindungsgemäß wird ermöglicht, dass der Eierstrom automatisch an die Leistung der Sortiermaschine angepasst wird. Dies kann einerseits autark und unabhängig von Signalen der Sortiermaschine erfolgen, indem der jeweilige Stauzustand gemessen wird und an ein Förderratenmaximum jeweils herangeregelt wird, unter Vermeidung von Stauzuständen. In anderer Weise kann dies erfolgen, indem Signale von der Sortiermaschine in die Regelung einfließen und entsprechend des Bedarfs der Sortiermaschine die Förderrate bzw. Förderbandgeschwindigkeit geregelt wird.

Weiterhin können erfindungsgemäß zusätzliche Alarme oder Warnungen generiert werden, die zur Optimierung der Steuerung herangezogen werden können und es einem Benutzer ermöglichen, Fehler vor deren Auftreten zu vermeiden oder aufgetretene Fehler zu erkennen. So kann beispielsweise ein bereits beim Anfahren bestehender Eierstau erkannt werden und in einem solchen Fall die Regelung in einem anderen Modus betrieben werden, um den Anfahrvorgang zu ermöglichen. Weiterhin kann erfasst werden, ob trotz Betriebs der Bänder keine Eier in dem Bildausschnitt hineingefördert werden, was auf eine Beschädigung des Förderbandantriebs, einen möglichen Kettenriss oder dergleichen hinweist. Weiterhin können größere Lücken von Eiern auf dem Querband erkannt werden und dies in nachfolgenden Sammelprozessen dazu eingesetzt werden, um den Sammelvorgang durch entsprechendes Ansteuern der Längsförderbänder in einzelnen Stallbereichen zu optimieren und solche Lücken zu vermeiden.

Erfindungsgemäß wird erreicht, dass der Eierdruck an einer beliebigen Stelle in einem Fördersystem für Eier zuverlässig verringert werden kann, insbesondere im Bereich einer Vereinzelung von Eiern im Einlauftrichter vor einer Sortiermaschine oder dergleichen. Die Verschmutzung der gesamten Anlage, insbesondere der Eierpack- und Sortiermaschine, wird maßgeblich verringert, insbesondere wird dies auch bei Verarbeitung von dünnschaligen Eiern erreicht. Die erfindungsgemäß mögliche konstante Förderung mit stufenloser Regelung der Förderbandgeschwindigkeit schont sowohl alle Antriebseinrichtungen entlang der gesamten Eierförderstrecke als auch die Eier selbst, die darauf gefördert werden. Die Steuerungsvorrichtung ist insbesondere vorteilhaft, weil die Einsammelzeiten von Eiern durch die optimierte Regelung reduziert werden können. Für eine zuverlässige Auslastung einer Sortiermaschine oder sonstigen Verarbeitungseinrichtungen ist es durch die erfindungsgemäß präzise Regelung nicht mehr notwendig, eine große Anzahl von Eiern auf dem Förderweg vorzuhalten, um Lücken zu vermeiden. Stattdessen kann bedarfsgenau diejenige Eiermenge der Verarbeitungsmaschine zu jedem Zeitpunkt zugefördert werden, die dort verarbeitet werden können, wodurch vermieden wird, dass Eier zu lange Umwelteinflüssen wie Hitze oder Kälte auf dem Förderband ausgesetzt sein müssen. Hierdurch kann die Qualität der eingesammelten, sortierten und verpackten Eier erhöht werden.

## Patentansprüche

1. Steuerungsvorrichtung für ein Eierförderband, umfassend
- Einen Förderbandantrieb, der mechanisch mit dem Förderband gekoppelt und ausgebildet ist, um das Eierförderband in zumindest zwei unterschiedlichen Geschwindigkeiten anzutreiben,
- eine Bilderfassungseinheit (250; 410) zur Aufnahme eines vorbestimmten Bildausschnitts (411; 421; 431; 441) des Förderbands,
- eine Auswertungseinheit (260), welche signaltechnisch mit der Bilderfassungseinheit (250; 410) gekoppelt ist, mit einer Zähleinheit, die ausgebildet ist, um alle in einer einzigen Bildaufnahme der Bilderfassungseinheit (250; 410) auf dem Bildausschnitt (411; 421; 431; 441) des Förderbandes erfassten Eier als Besatzdichte zu zählen,
- eine Regelungseinheit (260), welche mit der Auswertungseinheit (260) und mit dem Förderbandantrieb signaltechnisch gekoppelt und ausgebildet ist, um in Abhängigkeit der Besatzdichte die Geschwindigkeit des Förderbandantriebs zu regeln,
**dadurch gekennzeichnet, dass** die Auswertungseinheit (260) ausgebildet ist, um ein in den Bildausschnitt eintretendes Ei zu erkennen, das Ei in mehreren aufeinander folgenden Bildaufnahmen einer Bildsequenz zu verfolgen und aus der innerhalb des Bildausschnitts zurückgelegten Strecke des Eies pro Zeiteinheit eine Bewegungsgeschwindigkeit des Eis zu ermitteln, wobei eine Mehrzahl von Eiern erkannt und verfolgt wird und ein Mittelwert der aus den daraus ermittelten Bewegungsgeschwindigkeiten der Eier berechnet und als Förderbandgeschwindigkeit ausgegeben wird.

2. Steuerungsvorrichtung nach Anspruch 1,
- mit einer Differentialeinheit, die ausgebildet ist, um aus einer Sequenz von Bildaufnahmen die Anzahl der in einer vorbestimmten Zeitdauer auf dem Förderband geförderten Eier als Förderrate zu bestimmen,
- wobei die Regelungseinheit (260) mit der Differentialeinheit signaltechnisch gekoppelt und ausgebildet ist, um in Abhängigkeit der Besatzdichte und der Förderrate die Geschwindigkeit des Förderbandantriebs zu regeln.

3. Steuerungsvorrichtung nach Anspruch 1 oder 2,
**dadurch gekennzeichnet, dass** die Regelungseinheit (260) ausgebildet ist, um die Geschwindigkeit des Förderbandes im Falle der Anordnung des Bildausschnitts am Ende des Förderbandes zu verringern oder im Falle der Anordnung des Bildausschnitts am Anfang des Förderbandes zu erhöhen,
- wenn sich die Besatzdichte von einer Bildaufnahme zu einer darauffolgenden Bildaufnahme erhöht hat, insbesondere um eine vorbestimmte Quote erhöht hat und/oder die Förderrate in einer Sequenz von Bildaufnahmen zu einer darauffolgenden Sequenz von Bildaufnahmen verringert hat, insbesondere dass der Bildausschnitt im Endbereich eines Förderbandes angeordnet ist und die Regelungseinheit (260) ausgebildet ist, um die Geschwindigkeit des Förderbandes zu verringern,
- wenn sich die Besatzdichte von einer Bildaufnahme zu einer darauffolgenden Bildaufnahme erhöht hat, insbesondere um eine vorbestimmte Quote erhöht hat und/oder
- die Förderrate in einer Sequenz von Bildaufnahmen zu einer darauffolgenden Sequenz von Bildaufnahmen verringert hat oder unverändert geblieben ist.

4. Steuerungsvorrichtung nach Anspruch 1 oder 2,
**dadurch gekennzeichnet, dass** die Regelungseinheit (260) ausgebildet ist, um die Geschwindigkeit des Förderbandes zu verringern, wenn die Besatzdichte in einer Bildaufnahme einen vorbestimmten Wert überschritten hat und/oder wenn die Förderrate in einer Bildaufnahme einen vorbestimmten Wert unterschritten hat.

5. Steuerungsvorrichtung nach einem der vorhergehenden Ansprüche,
**dadurch gekennzeichnet, dass** die Auswertungseinheit solcherart ausgebildet ist, dass eine Bewegungsgeschwindigkeit eines Eis, welche um eine vorbestimmte Differenz von dem Mittelwert abweicht, unberücksichtigt bleibt und eine korrigierte Berechnung der Förderbandgeschwindigkeit unter Mittelwertbestimmung der verbleibenden Bewegungsgeschwindigkeiten der Eier erfolgt.

6. Förderbandanordnung mit einer Steuerungsvorrichtung nach einem der vorhergehenden Ansprüche, einer Verarbeitungseinrichtung mit einem zweiten Förderband und einem ersten Förderband, welches Eier zu der Verarbeitungseinrichtung fördert,
**dadurch gekennzeichnet, dass** die Bilderfassungseinheit (250; 410) angeordnet und ausgerichtet ist zur Aufnahme eines Bildausschnitts im Anfangsbereich des zweiten Förderbands, wobei vorzugsweise die Steuerungsvorrichtung signaltechnisch mit der Verarbeitungseinrichtung gekoppelt und ausgebildet ist, um ein Signal zu empfangen, welches eine Verarbeitung, eine Verarbeitungsgeschwindigkeit und/oder einen Stillstand der Verarbeitungseinrichtung charakterisiert und um in Abhängigkeit dieses Signals den Förderbandantrieb anzusteuern.

7. Förderbandanordnung nach Anspruch 6,
**dadurch gekennzeichnet, dass** die Steuerungsvorrichtung signaltechnisch mit der Verarbeitungseinrichtung gekoppelt und dass die Regelungseinheit (260) ausgebildet ist, um in Abhängigkeit der Besatzdichte und/oder der Förderrate die Verarbeitungseinrichtung zusätzlich oder alternativ zur Geschwindigkeit des Förderbandantriebs anzusteuern, insbesondere die Verarbeitungsgeschwindigkeit der Verarbeitungseinrichtung zu regeln.

8. Förderbandanordnung nach einem der Ansprüche 6 oder 7,
**dadurch gekennzeichnet, dass** zwei oder mehr Förderbänder mit der Verarbeitungseinrichtung zur Zufuhr von Eiern verbunden sind, jedes der Förderbänder mit jeweils einem Förderbandantrieb angetrieben wird, dessen Geschwindigkeit jeweils mittels einer Regelungseinheit, die signaltechnisch mit einer Auswertungseinheit und einer Bilderfassungseinheit zur Erfassung eines Förderbandausschnitts des jeweiligen Förderbandes gekoppelt ist, geregelt ist.

9. Verfahren zum Steuern der Geschwindigkeit eines Eierförderbandes, mit den Schritten:
- Antreiben eines Förderbandantriebs in zumindest zwei unterschiedlichen Geschwindigkeiten,
- Aufnehmen eines Bildausschnitts (411; 421; 431; 441) des Förderbands mittels einer Bilderfassungseinheit (250; 410),
- Zählen der in einer einzigen Bildaufnahme der Bilderfassungseinheit (250; 410) auf dem Bildausschnitt (411; 421; 431; 441) des Förderbandes erfassten Eier als Besatzdichte mittels einer Zähleinheit und
- Regeln der Geschwindigkeit des Förderbandantriebs in Abhängigkeit der Besatzdichte mittels einer Regelungseinheit (260),
wobei ein in den Bildausschnitt eintretendes Ei erkannt, in mehreren aufeinander folgenden Bildaufnahmen einer Bildsequenz verfolgt und aus der innerhalb des Bildausschnitts zurückgelegten Strecke des Eies pro Zeiteinheit eine Bewegungsgeschwindigkeit des Eis ermittelt, wobei eine Mehrzahl von Eiern erkannt und verfolgt wird und ein Mittelwert der aus den daraus ermittelten Bewegungsgeschwindigkeiten der Eier berechnet und als Förderbandgeschwindigkeit ausgegeben wird.

10. Verfahren nach Anspruch 9, **gekennzeichnet durch** die Schritte:
- Bestimmen der Anzahl der in einer vorbestimmten Zeitdauer auf dem Förderband geförderten Eier als Förderrate aus einer Sequenz von Bildaufnahmen mittels einer Differentialeinheit, und
- Regeln der Geschwindigkeit des Förderbandantriebs in Abhängigkeit der Besatzdichte und der Förderrate mittels einer Regelungseinheit.

11. Verfahren nach Anspruch 9 oder 10,
**dadurch gekennzeichnet, dass** die Geschwindigkeit des Förderbandes verringert wird, wenn
- sich die Besatzdichte von einer Bildaufnahme zu einer darauffolgenden Bildaufnahme erhöht hat, insbesondere um eine vorbestimmte Quote erhöht hat und/oder
- die Förderrate in einer Sequenz von Bildaufnahmen zu einer darauffolgenden Sequenz von Bildaufnahmen verringert hat,
insbesondere wenn
- sich die Besatzdichte von einer Bildaufnahme zu einer darauffolgenden Bildaufnahme erhöht hat, insbesondere um eine vorbestimmte Quote erhöht hat und
- die Förderrate in einer Sequenz von Bildaufnahmen zu einer darauffolgenden Sequenz von Bildaufnahmen verringert hat oder unverändert geblieben ist.

12. Verfahren nach einem der vorhergehenden Ansprüche 9-11,
**dadurch gekennzeichnet, dass** die Geschwindigkeit des Förderbandes verringert wird, wenn die Besatzdichte in einer Bildaufnahme einen vorbestimmten Wert überschritten hat und/oder wenn die Förderrate in einer Bildaufnahme einen vorbestimmten Wert unterschritten hat.

13. Verfahren nach einem der vorhergehenden Ansprüche 9-12,
**dadurch gekennzeichnet, dass** eine Bewegungsgeschwindigkeit eines Eis, welche um eine vorbestimmte Differenz von dem Mittelwert abweicht, unberücksichtigt bleibt und eine korrigierte Berechnung der Förderbandgeschwindigkeit unter Mittelwertbestimmung der verbleibenden Bewegungsgeschwindigkeiten der Eier erfolgt.

14. Verfahren nach einem der vorhergehenden Ansprüche 9-13,
**gekennzeichnet durch** Aufnehmen eines Bildausschnitts des Förderbands in einem in eine Verarbeitungseinrichtung mündenden Endbereich des Förderbands und Ansteuern des Förderbandantriebs in Abhängigkeit der Verarbeitung, einer Verarbeitungsgeschwindigkeit und/oder eines Stillstands der Verarbeitungseinrichtung und vorzugsweise Ansteuern der Verarbeitungseinrichtung in Abhängigkeit der Besatzdichte und der Förderrate zusätzlich oder alternativ zur Geschwindigkeit des Förderbandantriebs, insbesondere Regeln der Verarbeitungsgeschwindigkeit der Verarbeitungseinrichtung.

15. Verfahren nach einem der Ansprüche 9 bis 14,
bei dem zwei oder mehr Förderbänder mit einer Verarbeitungseinrichtung zur Zufuhr von Eiern verbunden sind, mit den Schritten
- Antreiben jedes der Förderbänder mit jeweils eines Förderbandantriebs, und
- Regeln der Geschwindigkeit jedes Förderbandantriebs mittels einer Regelungseinheit, die signaltechnisch mit einer Auswertungseinheit und einer Bilderfassungseinheit zur Erfassung eines Förderbandausschnitts des jeweiligen Förderbandes gekoppelt ist.

## Claims

1. Control unit for an egg conveyor belt comprising
- a conveyor belt drive which is mechanically connected to the conveyor belt and designed to drive the egg conveyor belt in at least two different speeds,
- a image recording unit (250; 410) to record a predetermined image section (411; 421; 431; 441) of the conveyor belt
**characterized by**
- an evaluation unit (260), which is connected to the image recording unit (250; 410) by means of signal technology with a counting unit, which is designed to count all eggs recorded in a single image recording of the image recording unit (250; 410) in the image section (411; 421; 431; 441) of the conveyor belt as stocking density,
- an adjustment unit (260), which is connected to the evaluation unit (260) and the conveyor belt drive by means of signal technology and is designed to adjust the speed of the conveyor belt drive depending on the stocking density,
wherein the evaluation unit (260) is designed to recognize an egg that enters into the image section, to follow the egg in several consecutive image recordings of an image sequence and to determine from the distance travelled within the image section of the egg per time unit a movement speed of the egg and to output this as the conveyor belt speed, wherein preferably a plurality of eggs is recognized and followed and a mean value is calculated from the thus determined movement speed of the eggs and output as conveyor belt speed.

2. Control unit according to Claim 1,
- with a differential unit, which is designed to determine the number of the eggs transported on the conveyor belt in a predetermined time period as conveying rate from a sequence of image recordings,
- whereby an adjustment unit (260) is connected to the differential unit by means of signal technology and is designed to adjust the speed of the conveyor belt drive depending on the stocking density and the conveying rate.

3. Control unit according to Claim 1 or 2,
**characterized in that** the adjustment unit (260) is designed to reduce the speed of the conveyor belt in case of the arrangement of the image section at the end of the conveyor belt or in case of the arrangement of the image section in the start of the conveyor belt, if
the stocking density increased from one image recording increased to a subsequent image quota and/or if the conveying rate decreased in a sequence of image recordings to a subsequent sequence of image recordings, in particular that the image section is arranged in the end section of a conveyor belt and the adjustment unit (260) is designed to reduce the speed of the conveyor belt,
- if the stocking density increased from one image recording to a subsequent image recording, in particular by a predetermined quota and/or
- the conveying rate decreased from one sequence of image recordings to a subsequent sequence of image recordings or has remained the same.

4. Control unit according to Claim 1 or 2,
**characterized in that** the adjustment unit (260) is designed to decrease the speed of the conveyor belt if the stocking density has exceeded a predetermined value in an image recording and/or if the conveying rate in an image recording has fallen short of a predetermined value.

5. Control unit according to one of the above Claims,
**characterized in that** the evaluation unit is designed in such a way that a movement speed of an egg which deviates by a predetermined difference from the mean value preferably remains unconsidered and a corrected calculation of the conveyor belt speed is made in determination of the mean value of the remaining movement speeds of the eggs.

6. Conveyor belt arrangement with a control unit according to one of the above Claims, a processing unit with a second conveyor belt and a first conveyor belt, which transports eggs to the processing unit,
**characterized in that** the image recording unit (250; 410) is arranged and aligned to record an image section in the starting area of the second conveyor belt, whereby preferably the control unit is connected with the processing unit by means of signal technology and is designed to receive a signal characterizing a processing, a processing speed and/or a stop of the processing unit and to control the conveyor belt drive depending on the this signal.

7. Conveyor belt arrangement according to Claim 6,
**characterized in that** the control unit is connected to the processing unit by means of signal technology and that the adjustment unit (260) is designed to control depending on the stocking density and/or the conveying rate of the processing unit in addition to or alternatively to the speed of the conveyor belt drive, in particular to adjust the processing speed of the processing unit.

8. Conveyor belt arrangement according to one of the Claims 6 or 7,
**characterized in that** two or more conveyor belts with the processing unit to supply eggs, by driving each of the conveyor belts with one conveyor belt drive each, whose speed is controlled in each case with an adjustment unit, which is connected to an evaluation unit by means of signal technology and an image recording unit to record a conveyor belt segment of the respective conveyor belt.

9. Method the speed of an egg conveyor belt with the steps:
- Driving of a conveyor belt drive with at least two different speeds,
- Recording of an image section (411; 421; 431; 441) of the conveyor belt by means of an image recording unit (250; 410),
**characterized by** the steps:
- Counting of the eggs recorded in a single image recordings of the image recording unit (250; 410) on the image section (411; 421; 431; 441) of the conveyor belt as stocking density by means of a counting unit and
- Adjusting of the speed of the conveyor belt drive depending on the stocking density by means of an adjustment unit (260),
wherein an egg that enters into the image section is recognized, tracked in several consecutive image recordings of an image sequence and a movement speed of the egg is determined from the distance travelled within the image section of the egg per time unit and output as the conveyor belt speed, wherein preferably a plurality of eggs is recognized and followed and a mean value is calculated from the thus determined movement speed of the eggs and output as conveyor belt speed.

10. Method according to Claim 9, **characterized by** the steps:
- Determining of the number of the eggs transported on the conveyor belt in a predetermined time period as conveying rate from a sequence of image recordings by means of a differential unit, and
- Adjusting of the speed of the conveyor belt drive depending on the stocking density and the conveying rate by means of an adjustment unit.

11. Method according to Claim 9 or 10,
**characterized in that** the speed of the conveyor belt is reduced, if
- the stocking density increased from one image recording to a subsequent image recording, in particular by a predetermined quota and/or
- the conveying rate decreased from one sequence of image recordings to a subsequent sequence of image recordings,
in particular if
- the stocking density increased from one image recording to a subsequent image recording, in particular by a predetermined quota and
- the conveying rate decreased from one sequence of image recordings to a subsequent sequence of image recordings or has remained the same.

12. Method according to one of the above Claims 9-11,
**characterized in that** the speed of the conveyor belt is decreased, if the stocking density has exceeded a predetermined value in an image recording and/or if the conveying rate in an image recording has fallen short of a predetermined value.

13. Method according to one of the above Claims 9-11,
**characterized in that** a movement speed of an egg which deviates by a predetermined difference from the mean value preferably remains unconsidered and a corrected calculation of the conveyor belt speed is made in determination of the mean value of the remaining movement speeds of the eggs.

14. Method according to one of the above Claims 9-13,
**characterized by** recording an image section of the conveyor belt in an end section of the conveyor belt that leads into the processing unit and controlling the conveyor belt drive depending on the processing, a processing speed and/or a stop of the processing unit and preferably control of the processing unit depending on the stocking density and the conveying rate in addition or in alternative to the speed of the conveyor belt drive, in particular adjusting the processing speed of the processing unit.

15. Method according to one of the Claims 9 through 14,
in which two or more conveyor belts are connected to a processing unit to supply eggs, with the steps
- Driving of each of the conveyor belt with a conveyor belt drive in each case, and
- Adjusting of the speed of each conveyor belt drive by means of an adjustment unit, which is connected to an evaluation unit and an image recording unit by means of signal technology to record a conveyor belt section of the respective conveyor belt.

## Revendications

1. Dispositif de commande d'un convoyeur à oeufs, comprenant
- un entraînement de convoyeur, qui est couplé mécaniquement au convoyeur et est réalisé pour entraîner le convoyeur à oeufs à au moins deux vitesses différentes,
- une unité de détection d'image (250 ; 410) pour la prise d'une partie d'image prédéterminée (411 ; 421 ; 431 ; 441) du convoyeur,
- une unité d'évaluation (260), laquelle est couplée selon la technique des signaux à l'unité de détection d'image (250 ; 410), avec une unité de comptage, qui est réalisée pour compter tous les oeufs détectés dans une seule prise de vue de l'unité de détection d'image (250 ; 410) sur la partie d'image prédéterminée (411 ; 421 ; 431 ; 441) du convoyeur en tant que densité,
- une unité de régulation (260), laquelle est couplée selon la technique des signaux à l'unité d'évaluation (260) et à l'entraînement de convoyeur et est réalisée pour régler la vitesse de l'entraînement de convoyeur en fonction de la densité,
**caractérisé en ce que**
l'unité d'évaluation (260) est réalisée pour détecter un oeuf entrant dans la partie d'image, de suivre l'oeuf dans plusieurs prises de vue successives d'une séquence d'images et de déterminer une vitesse de déplacement de l'oeuf à partir de la distance parcourue par l'oeuf par unité de temps à l'intérieur de la partie d'image,
dans lequel une pluralité d'oeufs est détectée et suivie et une valeur moyenne des vitesses de déplacement ainsi déterminées des oeufs est calculée et émise en tant que vitesse de convoyeur.

2. Dispositif de commande selon la revendication 1,
- avec une unité différentielle, qui est réalisée pour déterminer, à partir d'une séquence de prises de vue, le nombre d'oeufs transportés sur le convoyeur pendant une durée prédéterminée en tant que débit de transport,
- dans lequel l'unité de régulation (260) est couplée selon la technique des signaux à l'unité différentielle et est réalisée pour régler la vitesse de l'entraînement de convoyeur en fonction de la densité et du débit de transport.

3. Dispositif de commande selon la revendication 1 ou 2,
**caractérisé en ce que** l'unité de régulation (260) est réalisée pour réduire la vitesse du convoyeur en cas d'agencement de la partie d'image à la fin du convoyeur ou pour l'augmenter en cas d'agencement de la partie d'image au début du convoyeur,
- lorsque la densité augmente d'une prise de vue à une prise de vue suivante, en particulier a augmenté d'un taux prédéterminé et/ou le débit de transport a diminué dans une séquence de prises de vue à une séquence de prises de vue suivante, en particulier que la partie d'image est agencée dans la zone d'extrémité d'un convoyeur et l'unité de régulation (260) est réalisée pour réduire la vitesse du convoyeur,
- lorsque la densité augmente d'une prise de vue à une prise de vue suivante, en particulier a augmenté d'un taux prédéterminé et/ou
- le débit de transport a diminué d'une séquence de prises de vue à une séquence de prises de vue suivante ou est resté inchangé.

4. Dispositif de commande selon la revendication 1 ou 2,
**caractérisé en ce que** l'unité de régulation (260) est réalisée pour réduire la vitesse du convoyeur, lorsque la densité dans une prise de vue a dépassé une valeur prédéterminée et/ou lorsque le débit de transport dans une prise de vue a dépassé une valeur prédéterminée.

5. Dispositif de commande selon l'une quelconque des revendications précédentes,
**caractérisé en ce que** l'unité d'évaluation est réalisée de telle sorte qu'une vitesse de déplacement d'un oeuf, laquelle dévie d'une différence prédéterminée de la valeur moyenne, n'est pas prise en compte et un calcul corrigé de la vitesse de convoyeur a lieu par détermination de la valeur moyenne des vitesses de déplacement restantes des oeufs.

6. Ensemble convoyeur avec un dispositif de commande selon l'une quelconque des revendications précédentes, un dispositif de traitement avec un deuxième convoyeur et un premier convoyeur qui transporte les oeufs vers le dispositif de traitement,
**caractérisé en ce que** l'unité de détection d'image (250 ; 410) est agencée et orientée pour la prise d'une partie d'image dans la zone de début du deuxième convoyeur, dans lequel de préférence le dispositif de commande est couplé selon la technique des signaux au dispositif de traitement et est réalisé pour recevoir un signal, lequel caractérise un traitement, une vitesse de traitement et/ou un arrêt du dispositif de traitement et pour commander l'entraînement de convoyeur en fonction de ce signal.

7. Ensemble convoyeur selon la revendication 6,
**caractérisé en ce que** le dispositif de commande est couplé selon la technique des signaux au dispositif de traitement et que l'unité de régulation (260) est réalisée pour commander, en fonction de la densité et/ou du débit de transport, le dispositif de traitement en plus ou en variante à la vitesse de l'entraînement de convoyeur, en particulier pour régler la vitesse de traitement du dispositif de traitement.

8. Ensemble convoyeur selon l'une quelconque des revendications 6 ou 7,
**caractérisé en ce que** deux convoyeurs ou plus sont reliés au dispositif de traitement pour l'amenée d'oeufs, chacun des convoyeurs est entraîné avec respectivement un entraînement de convoyeur, dont la vitesse est réglée respectivement au moyen d'une unité de régulation, qui est couplée selon la technique des signaux à une unité d'évaluation et à une unité de détection d'image pour la détection d'une section de convoyeur du convoyeur respectif.

9. Procédé de commande de la vitesse d'un convoyeur à oeufs, avec les étapes de :
- entraînement d'un entraînement de convoyeur à au moins deux vitesses différentes,
- prise d'une partie d'image prédéterminée (411 ; 421 ; 431 ; 441) du convoyeur au moyen d'une unité de détection d'image (250 ; 410),
- comptage des oeufs détectés dans une seule prise de vue de l'unité de détection d'image (250 ; 410) sur la partie d'image (411 ; 421 ; 431 ; 441) du convoyeur en tant que densité au moyen d'une unité de comptage et
- régulation de la vitesse de l'entraînement de convoyeur en fonction de la densité au moyen d'une unité de régulation (260),
dans lequel un oeuf entrant dans la partie d'image est détecté, suivi dans plusieurs prises de vue successives d'une séquence d'images et une vitesse de déplacement de l'oeuf est déterminée à partir de la distance parcourue par l'oeuf par unité de temps à l'intérieur de la partie d'image,
dans lequel une pluralité d'oeufs est détectée et suivie et une valeur moyenne des vitesses de déplacement ainsi déterminées des oeufs est calculée et émise en tant que vitesse de convoyeur.

10. Procédé selon la revendication 9, **caractérisé par** les étapes de :
- détermination du nombre d'oeufs transportés sur le convoyeur pendant une durée prédéterminée en tant que débit de transport à partir d'une séquence de prises de vue au moyen d'une unité différentielle, et
- régulation de la vitesse de l'entraînement de convoyeur en fonction de la densité et du débit de transport au moyen d'une unité de régulation.

11. Procédé selon la revendication 9 ou 10, **caractérisé en ce que** la vitesse du convoyeur est réduite, lorsque
- la densité augmente d'une prise de vue à une prise de vue suivante, en particulier a augmenté d'un taux prédéterminé et/ou
- le débit de transport a diminué dans une séquence de prises de vue à une séquence de prises de vue suivante,
en particulier lorsque
- la densité a augmenté d'une prise de vue à une prise de vue suivante, en particulier a augmenté d'un taux prédéterminé et
- le débit de transport a diminué d'une séquence de prises de vue à une séquence suivante de prises de vue ou est resté inchangé.

12. Procédé selon l'une quelconque des revendications précédentes 9-11,
**caractérisé en ce que** la vitesse du convoyeur est réduite, lorsque la densité dans une prise de vue a dépassé une valeur prédéterminée et/ou lorsque le débit de transport dans une prise de vue a dépassé une valeur prédéterminée.

13. Procédé selon l'une quelconque des revendications précédentes 9-12,
**caractérisé en ce qu'**une vitesse de déplacement d'un oeuf, laquelle dévie d'une différence prédéterminée de la valeur moyenne, n'est pas prise en compte et un calcul corrigé de la vitesse de convoyeur a lieu par détermination de la valeur moyenne des vitesses de déplacement restantes des oeufs.

14. Procédé selon l'une quelconque des revendications précédentes 9-13,
**caractérisé par** la prise d'une partie d'image du convoyeur dans une zone d'extrémité du convoyeur débouchant dans un dispositif de traitement et la commande de l'entraînement de convoyeur en fonction du traitement, d'une vitesse de traitement et/ou d'un arrêt du dispositif de traitement et de préférence la commande du dispositif de traitement en fonction de la densité et du débit de transport en plus ou en variante à la vitesse de l'entraînement de convoyeur, en particulier la régulation de la vitesse de traitement du dispositif de traitement.

15. Procédé selon l'une quelconque des revendications 9 à 14,
dans lequel deux convoyeurs ou plus sont reliés à un dispositif de traitement pour l'amenée d'oeufs, avec les étapes de
- entraînement de chacun des convoyeurs avec respectivement un entraînement de convoyeur, et
- régulation de la vitesse de chaque entraînement de convoyeur au moyen d'une unité de régulation, qui est couplée selon la technique des signaux à une unité d'évaluation et à une unité de détection d'image pour la détection d'une section de convoyeur du convoyeur respectif.
